# EUROPÄISCHE PATENTANMELDUNG

(11) **EP 3 534 176 A1**
(43) Veröffentlichungstag der Anmeldung: **04.09.2019**
(21) Anmeldenummer: 18159492.0
(22) Anmeldetag: 01.03.2018
(51) Int. Cl.: G01S 7/481, G01S 7/484

(54) **LASERBASIERTE DISTANZMESSUNG MITTELS DOPPELKAMM-LASER**

(71) Anmelder: TOPTICA Projects GmbH, 82166 Gräfelfing (DE)
(72) Erfinder: Zach, Armin, 86949 Windach (DE)
(74) Vertreter: Schneiders & Behrendt PartmbB Rechtsanwälte - Patentanwälte

(57) **Zusammenfassung**

Die Erfindung betrifft eine Vorrichtung und ein Verfahren zur laserbasierten Distanzmessung. Es ist Aufgabe der Erfindung, eine Methode zur laserbasierten Distanzmessung bereitzustellen, die hinsichtlich des Aufwands und auch hinsichtlich der Genauigkeit gegenüber dem Stand der Technik verbessert ist. Hierzu schlägt die Erfindung vor, dass ein Doppelkamm-Laser verwendet wird, der gepulste Signalstrahlung und gepulste Referenzstrahlung emittiert, wobei der Doppelkamm-Laser ein modengekoppelter Laser ist, der sowohl die Signalstrahlung als auch die Referenzstrahlung emittiert. Das Spektrum der Signalstrahlung und das Spektrum der Referenzstrahlung ist jeweils ein Frequenzkamm, wobei sich die Signalstrahlung und die Referenzstrahlung hinsichtlich der Repetitionsrate voneinander unterscheiden. Mit dem Doppelkamm-Laser ist eine Sende- und Empfangsoptik (15) verbunden, die die Signalstrahlung zu einem entfernten Zielobjekt (16) hin aussendet und die an dem Zielobjekt (16) reflektierte oder gestreute Signalstrahlung empfängt. Mit dem Doppelkamm-Laser und der Sende- und Empfangsoptik ist außerdem eine Messeinheit verbunden, die, vorzugsweise durch interferometrische Überlagerung der empfangenen Signalstrahlung mit der Referenzstrahlung, ein Messsignal erzeugt und daraus die Distanz zum Zielobjekt (16) ableitet.

## Beschreibung

Die Erfindung betrifft eine Vorrichtung und ein Verfahren zur Distanzmessung.

LIDAR steht als Abkürzung für engl. "light detection and ranging". Es handelt sich um eine Methode zur optischen Distanzmessung. LIDAR-Systeme senden Signalstrahlung in Form von Laserpulsen aus und detektieren das von einem Zielobjekt zurückreflektierte oder -gestreute Licht. Aus der Laufzeit der Signalstrahlung, d.h. der Zeit, die zwischen dem Aussenden eines Laserpulses bis zur Detektion des zurückreflektierten oder -gestreuten Laserpulses vergeht, wird die Entfernung zwischen dem Ort des LIDAR-Systems (genauer dem Ort der die Laserpulse aussendenden und empfangenden Optik des LIDAR-Systems) und dem Zielobjekt berechnet. Die Entfernung ist gleich der Hälfte (da die Strecke zwischen dem Aussendeort der Signalstrahlung und dem Zielobjekt zweifach durchlaufen wird) der gemessenen Laufzeit multipliziert mit der Lichtgeschwindigkeit, gegebenenfalls korrigiert um systematische Abweichungen entsprechend den Laufzeiten der Strahlung innerhalb des LIDAR-Systems.

Doloca et al. (PTB-Mitteilungen, Band 120, Heft 2, 2010, Seiten 120ff) schlagen ein Femtosekundenlaser-basiertes Messsystem für geodätische Längen vor. Das vorbekannte System basiert auf einem einzelnen fs-Laser, der gepulste Signalstrahlung emittiert, deren Spektrum ein Frequenzkamm ist. Die gepulste Laserstrahlung wird von einem Messobjekt reflektiert und von einer Hochgeschwindigkeits-Fotodiode empfangen. Ein Teil des Laserstrahls wird als Referenzsignal genutzt und direkt auf die Fotodiode geführt. Bei dieser Art der Detektion der fs-Pulse wird ein elektrisches Signal im GHz-Bereich erzeugt, das zur Phasendetektion zweier Spektrallinien des Frequenzkamms herangezogen wird. Auf diese Weise erfolgt eine hoch genaue Distanzmessung durch interferometrische Phasenauswertung.

Aus der US 2011/0285980 A1 ist ein LIDAR-System bekannt, das zwei kohärente fs-Faserlaser verwendet, um eine präzise Distanzmessung auf lange Distanz durchzuführen. Einer der beiden kohärenten fs-Faserlaser emittiert gepulste Signalstrahlung, deren Spektrum ein Frequenzkamm ist. Der andere fs-Faserlaser emittiert gepulste Referenzstrahlung, wobei auch das Spektrum der Referenzstrahlung ein Frequenzkamm ist. Die Referenzstrahlung wird dabei als lokaler Oszillator für eine Heterodyndetektion der an dem Zielobjekt reflektierten oder gestreuten Signalstrahlung verwendet. Hierbei erfolgt eine Detektion der empfangenen Signalstrahlung durch Überlagerung der empfangenen Signalstrahlung mit der Referenzstrahlung. Im Ergebnis wird, wiederum im Wege einer Phasendetektion, hoch genau die Laufzeit der Signalstrahlung gemessen, woraus dann die Distanz zu dem Zielobjekt, wie oben erläutert, abgeleitet wird. Damit ist eine Genauigkeit bei der Entfernungsmessung über mehrere Kilometer zum Zielobjekt von 3 µm bei einer Messzeit von 200 µs zu erreichen. Durch Erhöhung der Messzeit auf mehrere 10 ms (zur Rauschunterdrückung durch Signalmittelung) kann die Genauigkeit bis in den Nanometerbereich hinein erhöht werden. Bei der Phasendetektion wird ausgenutzt, dass sich die beiden fs-Faserlaser hinsichtlich der Repetitionsrate (geringfügig) voneinander unterscheiden. Entsprechend weisen die Laserpulse der Signalstrahlung und der Referenzstrahlung einen von Laserpuls zu Laserpuls zunehmenden Zeitversatz auf. Der Zeitversatz zwischen den Laserpulsfolgen der beiden fs-Faserlaser überstreicht zyklisch den vollen Zeitabstand zwischen zwei aufeinander folgenden Laserpulsen der Signalstrahlung. Dies wird ausgenutzt, indem über einen solchen Zyklus hinweg ein Messsignal durch heterodyne Überlagerung der vom Zielobjekt reflektierten oder gestreuten Signalstrahlung mit der Referenzstrahlung erfasst wird. Aus dem Verlauf des Messsignals während eines Zyklus kann dann mit hoher Präzision auf die Laufzeit der Signalstrahlung und damit auf die Distanz geschlossen werden.

Die Verwendung zweier fs-Laser (z.B. gemäß der zuvor zitierten US 2011/0285980 A1) hat gegenüber der Distanzmessung mittels nur eines Lasers (z.B. gemäß Doloca et al., s.o.) den Vorteil, dass die hochfrequente Fotodetektion und Phasenmessung im GHz-Bereich durch eine technisch deutlich einfachere und robustere RF-Detektion im MHz-Bereich ersetzt werden kann. Auf der anderen Seite sind der erhebliche Aufwand und die damit einhergehenden hohen Kosten, die daraus resultieren, dass zwei modengekoppelte fs-Faserlaser erforderlich sind, die zwei kohärente Frequenzkämme für die Signal- und Referenzstrahlung erzeugen, wiederum ein Nachteil. Bei dem vorbekannten System ist jeder der beiden fs-Faserlaser an zwei Dauerstrich-Referenzlaser, die bei verschiedenen Wellenlängen arbeiten, phasengekoppelt, um die erforderliche Kohärenz der beiden Frequenzkämme zu erreichen. Die beiden Dauerstrich-Referenzlaser sind zur Stabilisierung wiederum an eine gemeinsame Referenz-Kavität gekoppelt. Diese Kopplung der beiden Frequenzkämme ist fehleranfällig und erzeugt Instabilitäten. Daraus resultiert ein Timing-Jitter sowohl in der Signalstrahlung also auch in der Referenzstrahlung, was sich negativ auf die Genauigkeit bei der Distanzmessung auswirkt.

Ein weiteres System zur Distanzmessung (und Geschwindigkeitsmessung) auf Basis zweier optischer Frequenzkämme ist aus der DE 10 2012 001 754 A1 bekannt. Wiederum werden mittels zweier fs-Laser zwei Frequenzkammsignale erzeugt, die unterschiedliche Linienabstände aufweisen. Die beiden Frequenzkammsignale werden überlagert und das Überlagerungssignal wird gemessen, um daraus eine Distanz als Wegunterschied zwischen den Strahlengängen der Frequenzkammsignale abzuleiten. Wesentlich ist dabei, dass die Frequenzkammsignale zunächst überlagert und somit zur Interferenz gebracht werden und dann gemeinsam über die zu messende Distanz propagieren. Das bei der Detektion gemessene elektrische Radiofrequenzsignal weist dabei äquidistante spektrale Komponenten auf, deren Abstand der Differenz der Linienabstände entspricht. Die Länge der zu messenden Strecke lässt sich aus den Phasen der elektrischen Schwebungssignale ermitteln. Der Eindeutigkeitsbereich der Distanzmessung ist bei dieser Vorgehensweise vorteilhaft durch die Differenz der Linienabstände gegeben und kann damit nahezu beliebig groß sein.

Ein Problem bei dem in der zuvor zitierten DE 10 2012 001 754 A1 beschriebenen System ist, dass dieses zwei zueinander nicht stabilisierte fs-Laser als Quellen für die Frequenzkammsignale verwendet. Dabei wird davon ausgegangen, dass eine langsame gegenseitige Frequenzdrift der Kammlinien durch geeignete Analyse der Detektorsignale nachverfolgt werden kann und damit keine Einschränkung für die Distanzmessung darstellt. Ausreichend soll eine gegenseitige Kohärenzzeit sein, welche größer ist als die Aufnahme eines Spektrums. Das bedeutet, anders ausgedrückt, dass die relative Linienbreite der Kammlinien der beiden Frequenzkammsignale zueinander kleiner sein muss als die Messrate. Dabei bleibt allerdings das unvermeidliche Phasenrauschen der Frequenzkammsignale zueinander außer Betracht, das sich in erheblichem Umfang negativ auf die Messgenauigkeit auswirkt. Das Phasenrauschen wird beeinflusst durch das Pumprauschen der verwendeten fs-Laser, die Resonator-interne Gruppengeschwindigkeitsdispersion sowie die unterschiedlichen thermischen und akustischen Störungen der beiden Laser etc. Weiteren negativen Einfluss auf die Messgenauigkeit hat die Repetitionsratenungenauigkeit der beiden Frequenzkämme, d.h. das Timing-Jitter der Frequenzkämme, welches wiederum ein Resultat des zeitlich akkumulierten Phasenrauschens ist.

Vor diesem Hintergrund ist es Aufgabe der Erfindung, eine Vorrichtung und ein Verfahren zur laserbasierten Distanzmessung bereitzustellen, die hinsichtlich des Aufwands und auch hinsichtlich der Genauigkeit gegenüber dem Stand der Technik verbessert sind.

Diese Aufgabe löst die Erfindung durch eine Vorrichtung zur Distanzmessung, mit
- einem Doppelkamm-Laser, der gepulste Signalstrahlung und gepulste Referenzstrahlung emittiert, wobei der Doppelkamm-Laser ein modengekoppelter Laser ist, der sowohl die Signalstrahlung als auch die Referenzstrahlung emittiert, wobei das Spektrum der Signalstrahlung und das Spektrum der Referenzstrahlung jeweils ein Frequenzkamm ist und wobei sich die Signalstrahlung und die Referenzstrahlung hinsichtlich der Repetitionsrate voneinander unterscheiden,
- einer mit dem Doppelkamm-Laser verbundenen Sende- und Empfangsoptik, die die Signalstrahlung zu einem entfernten Zielobjekt hin aussendet und die an dem Zielobjekt reflektierte oder gestreute Signalstrahlung empfängt, und
- einer mit dem Doppelkamm-Laser und der Sende- und Empfangsoptik verbundenen Messeinheit, die aus der empfangenen Signalstrahlung mit der Referenzstrahlung ein Messsignal erzeugt und daraus die Distanz zum Zielobjekt ableitet.

Außerdem löst die Erfindung die Aufgabe durch ein Verfahren zur Distanzmessung, mit den Verfahrensschritten:
- Erzeugen von gepulster Signalstrahlung und gepulster Referenzstrahlung mittels eines Doppelkamm-Lasers, wobei das Spektrum der Signalstrahlung und das Spektrum der Referenzstrahlung jeweils ein Frequenzkamm ist und wobei sich die Signalstrahlung und die Referenzstrahlung hinsichtlich der Repetitionsrate voneinander unterscheiden, wobei der Doppelkamm-Laser durch einen modengekoppelten Laser gebildet ist, der sowohl die Signalstrahlung als auch die Referenzstrahlung emittiert,
- Aussenden der Signalstrahlung zu einem entfernten Zielobjekt,
- Empfangen der an dem Zielobjekt reflektierten oder gestreuten Signalstrahlung,
- Erzeugen eines Messsignals aus der empfangenen Signalstrahlung und der Referenzstrahlung, und
- Ableiten der Distanz zu dem Zielobjekt aus dem Messsignal.

Die Erfindung übernimmt das grundlegende Messprinzip zur Ermittlung der Laufzeit der Signalstrahlung unter Verwendung zweier optischer Frequenzkämme z.B. gemäß der oben zitierten DE 10 2012 001 754 A1. Bevorzugt erfolgt eine interferometrische Überlagerung und Phasendetektion von Signal- und Referenzstrahlung, um hoch genau die Distanz zum Zielobjekt zu bestimmen. Im Unterschied zum Stand der Technik wird zur Erzeugung der Signal- und Referenzstrahlung erfindungsgemäß jedoch ein Doppelkamm-Laser verwendet, d.h. ein einziger modengekoppelter Laser, der gleichzeitig zwei optische Frequenzkämme bei zwei (geringfügig) unterschiedlichen Repetitionsraten erzeugt.

Die Verwendung nur eines einzigen Lasers bedeutet, dass sich zwei Laseroszillatoren, die jeweils einen der beiden Frequenzkämme erzeugen, möglichst viele optische Komponenten teilen, und zwar möglichst die erforderliche Pumplichtquelle, das Verstärkungsmedium (ganz oder zumindest teilweise), in welches das Licht der gemeinsamen Pumplichtquelle eingekoppelt wird, und idealerweise auch zumindest einen Endspiegel des Laserresonators. Diese "Common Mode'-Ausgestaltung hat positive Auswirkungen auf die relativen Phasenschwankungen der beiden Frequenzkämme zueinander:
- Beide Laseroszillatoren arbeiten mit derselben Pumplichtquelle, so dass die Auswirkung des Pumprauschens für beide Frequenzkämme gleich ist.
- Die Resonator-interne Gruppengeschwindigkeitsdispersion ist für beide Frequenzkämme (weitgehend) identisch.
- Thermische und akustische Störungen haben weitgehend dieselben Auswirkungen auf die beiden Frequenzkämme.
- Auch die Netto-Resonator-Dispersion (engl. "net cavity dispersion") ist für beide Oszillatoren weitgehend identisch.

Aus dieser "Common Mode"-Architektur des Lasers resultiert außerdem, dass der (relative) mittlere Timing-Jitter (ermittelt nach der Methode der Wurzel der mittleren Abweichungsquadrate) im Bereich von nur wenigen Femtosekunden liegt, da es fast keine unterschiedlichen Wegstrecken im Resonator für die Signal- und Referenzstrahlung gibt, bei denen durch akustische oder thermische Störungen Timing-Jitter induziert werden kann.

Gegenüber dem Stand der Technik gemäß der DE 10 2012 001 754 A1 können somit die relativen Schwankungen der beiden Frequenzkämme zueinander minimiert werden. Gerade diese relativen Schwankungen beeinflussen die Messgenauigkeit bei der Distanzmessung, die folglich durch die Erfindung deutlich verbessert werden kann.

Da auf der anderen Seite erfindungsgemäß nur ein einziger Laser benötigt wird, ist der Aufwand gegenüber dem Stand der Technik gemäß der US 2011/0285980 A1 erheblich reduziert. Insbesondere entfällt die aufwändige und zu Instabilitäten neigende Kopplung der beiden separaten Lasersysteme.

Durch die Erfindung kann also ein einfaches und robustes System zur Distanzmessung bereitgestellt werden. Außerdem kann die Präzision bei der Distanzmessung gegenüber dem Stand der Technik weiter gesteigert werden.

Die erfindungsgemäße Methode ermöglicht, wie in der DE 10 2012 001 754 A1 beschrieben, neben der Distanzmessung auch eine hoch genaue Geschwindigkeitsmessung.

Doppelkamm-Laser im Sinne der Erfindung, d.h. einzelne Laser die gleichzeitig zwei kohärente optische Frequenzkämme erzeugen, sind als solche - für andere Anwendungen - aus dem Stand der Technik bekannt (siehe z.B. R. Hui: "Absorption spectroscopy based on polarization-multiplexed dual-frequency femtosecond fiber laser combs", CLEO 2017, paper AF1 B.2).

Der modengekoppelte Laser der erfindungsgemäßen Vorrichtung ist vorzugsweise ein Faserlaser, dessen Resonator als gemeinsames Verstärkungsmedium für die Signal- und Referenzstrahlung eine dotierte optische Faser aufweist.

Bei einer möglichen Ausgestaltung weist der Resonator des Doppelkamm-Lasers eine lineare Konfiguration mit endseitigen Reflektoren auf. Eine Ausgestaltung des Doppelkamm-Lasers mit ringförmigem Resonator ist ebenfalls denkbar. Der Einsatz von polarisationserhaltenden Fasern in dem Resonator des Doppelkamm-Lasers ist für den praktischen Einsatz wünschenswert, um die erforderliche Robustheit und Reproduzierbarkeit zur erlangen.

Die Signalstrahlung und die Referenzstrahlung propagieren bei dem faserbasierten Doppelkamm-Laser zumindest in einem Abschnitt des Verstärkungsmediums gemeinsam. Zweckmäßig sind die Polarisation der Signalstrahlung und die Polarisation der Referenzstrahlung in dem Verstärkungsmedium orthogonal zueinander, um Wechselwirkungen zwischen der Signal- und Referenzstrahlung zu vermeiden. Trotzdem sind die beiden Frequenzkämme inhärent (jedenfalls über für die Entfernungsmessung in der Praxis ausreichende Zeiträume) kohärent.

Um gezielt einen Laufzeitunterschied und damit den gewünschten Repetitionsratenunterschied für die Signalstrahlung und die Referenzstrahlung im Resonator des Doppelkamm-Lasers einzustellen, kann der Resonator des Doppelkamm-Lasers zweckmäßig einen Abschnitt aufweisen, in dem die Signalstrahlung und die Referenzstrahlung in separaten Strahlwegen propagieren. Die gewünschten Repetitionsraten können dabei über die (unterschiedlichen) Längen der Strahlwege eingestellt werden. Hierzu kann in zumindest einem der Strahlwege eine (vorzugsweise einstellbare) Verzögerungsstrecke vorgesehen sein. Bei einer möglichen Ausgestaltung ist in zumindest einem der Strahlwege ein Brechungsindexmodulator, z.B. ein elektrooptischer Modulator, angeordnet. Die Variation des Brechungsindex bewirkt eine Variation der optischen Weglänge in dem betreffenden Strahlweg, wodurch es ermöglicht wird, den Repetitionsratenunterschied der Signal- und Referenzstrahlung zu justieren oder zu variieren. Dadurch lassen sich die Auflösung und die Geschwindigkeit der Entfernungsmessung beeinflussen. Der Zeitversatz zwischen den Laserpulsfolgen der Signal- und Referenzstrahlung überstreicht normalerweise zyklisch den vollen Zeitabstand zwischen zwei aufeinander folgenden Laserpulsen der Signalstrahlung. Über einen solchen Zyklus hinweg wird das Phasen-Messsignal durch heterodyne Überlagerung der vom Zielobjekt reflektierten oder gestreuten Signalstrahlung mit der Referenzstrahlung erfasst, um dann aus dem Verlauf des Messsignals während eines Zyklus auf die Laufzeit der Signalstrahlung und damit auf die Distanz zum Zielobjekt schließen zu können. Durch die Variation des Repetitionsratenunterschieds kann der Bereich, über den der Zeitversatz der Pulse der Signalstrahlung und der Referenzstrahlung variiert, vorgegeben und an die Anforderungen der jeweiligen Messaufgabe angepasst werden. Der Abtastbereich und die Wahl der Messpunkte, d.h. der bei der Messung jeweils verwendeten Zeitversatzwerte, sind damit frei vorgebbar. Es muss insbesondere nicht der volle Zyklus, d.h. der volle Zeitabstand zwischen zwei aufeinander folgenden Laserpulsen während einer Messung durchlaufen werden, so dass die Messzeit reduziert werden kann. Nähere Einzelheiten zu diesem Prinzip sind in der DE 10 2015 108 602 A1 beschrieben, auf die Bezug genommen wird.

Bei einer bevorzugten Ausgestaltung der erfindungsgemäßen Vorrichtung umfasst die Messeinheit einen Strahlteiler (Koppler), der die Signalstrahlung und die Referenzstrahlung auf einem oder auf zwei Fotodetektoren (z.B. Fotodioden) überlagert, wobei das Abtastsignal als elektrisches Signal durch optisch heterodyne Detektion erzeugt wird. Aus der phasenempfindlichen heterodynen Detektion resultiert ein elektrisches Signal, das direkt die Phasen- und damit die Zeitdifferenz zwischen den Laserpulsen der Signal- und der Referenzstrahlung wiedergibt, woraus wiederum die Laufzeit der Signalstrahlung abgeleitet werden kann. Vorzugsweise werden zwei Fotodetektoren für eine balancierte Heterodyndetektion verwendet, um den Einfluss des Rauschens der gegenüber der vom Zielobjekt reflektierten oder daran gestreuten Signalstrahlung deutlich stärkeren Referenzstrahlung zu reduzieren.

Besonders bevorzugt ist eine Ausgestaltung, bei der die Messeinheit einen Strahlteiler (Koppler) umfasst, der die Signalstrahlung und die Referenzstrahlung in einem balancierten optischen Kreuzkorrelator überlagert, wobei die Ausgangsstrahlung des balancierten optischen Kreuzkorrelators mittels Fotodetektoren in ein elektrisches Signal umgewandelt wird. Die optische Heterodyndetektion mittels Kreuzkorrelator bietet eine erheblich höhere Empfindlichkeit hinsichtlich des Zeitversatzes/der Phase zwischen den Laserpulsen der Signal- und Referenzstrahlung als die zuvor beschriebene Heterodyndetektion per Fotodetektor. Als Kreuzkorrelator eignet sich ein phasenangepasster nichtlinearer optischer Kristall, der die darin überlagerte Signal- und Referenzstrahlung in Strahlung bei einer höheren Harmonischen umwandelt (siehe z.B. Kim et al., "Attosecond-precision ultrafast photonics", Laser & Photonics Reviews, Band 4, 2010, Seiten 432 bis 456).

Ausführungsbeispiele der Erfindung werden im Folgenden anhand der Zeichnungen näher erläutert. Es zeigen:
- Figur 1: schematische Darstellung eines erfindungsgemäßen Systems;
- Figur 2: schematische Darstellung eines erfindungsgemäßen Systems in einer Ausgestaltung mit Doppelkamm-Laser mit linearem Resonator;
- Figur 3: schematische Darstellung eines balancierten optischen Kreuzkorrelators zur erfindungsgemäßen Heterodyndetektion;
- Figur 4: schematische Darstellung eines Doppelkamm-Lasers gemäß der Erfindung in einer Ausgestaltung mit ringförmigem Resonator und Brechungsindexmodulator.

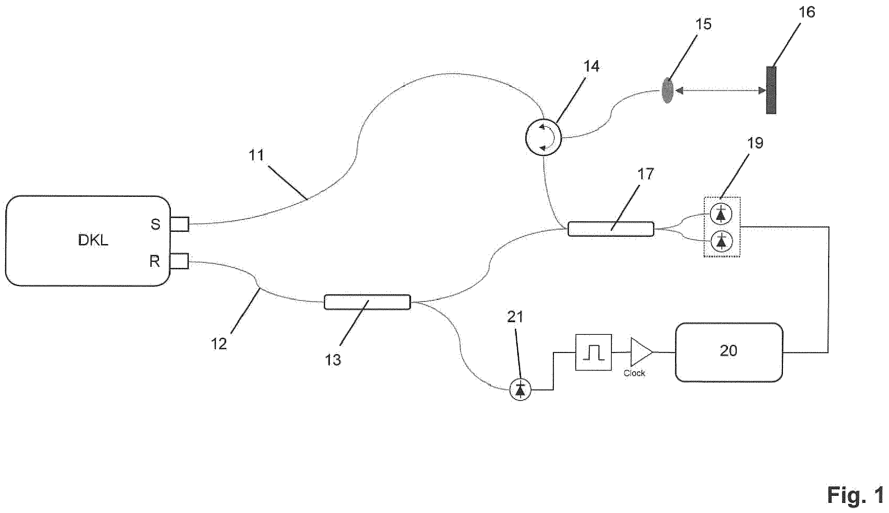

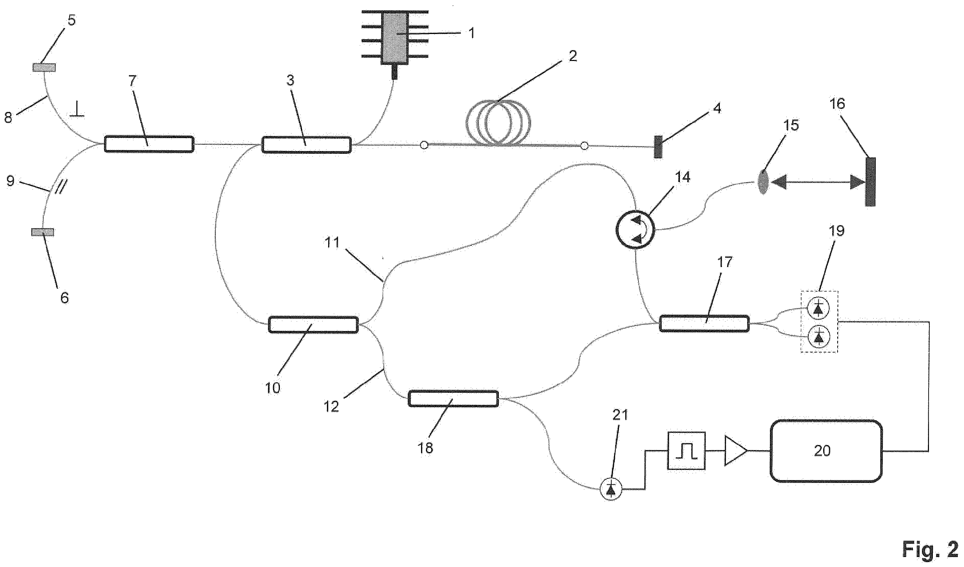

Die Figuren 1 und 2 zeigen schematisch ein erfindungsgemäßes System zur Distanzmessung. Dieses umfasst einen Doppelkamm-Laser DKL in Form eines modengekoppelten Faserlasers, der an einem Ausgang S gepulste Signalstrahlung und am anderen Ausgang R gepulste Referenzstrahlung emittiert. Das Spektrum der Signalstrahlung und das Spektrum der Referenzstrahlung ist jeweils ein Frequenzkamm, wobei sich die Signalstrahlung und die Referenzstrahlung hinsichtlich der Repetitionsrate voneinander unterscheiden.

Der Doppelkamm-Laser DKS besteht bei dem Ausführungsbeispiel der Figur 2 aus einer Laserdiode 1 zum optischen Pumpen einer Verstärkerfaser 2, bei der es sich z.B. um eine mit Erbium-Ionen dotierte Faser handeln kann. Die Pumpstrahlung der Laserdiode 1 wird über einen WDM-Koppler 3 in den Resonator des Lasers eingekoppelt, der die Verstärkerfaser 2 enthält. Der Resonator weist eine lineare Konfiguration mit endseitigen Reflektoren 4, 5 und 6 auf. Bei den Reflektoren 5 und 6 handelt es sich um sättigbare Absorberspiegel, die als Modenkopplungselemente fungieren. Die Pulsdauer der Signal- und Referenzstrahlung beträgt z.B. etwa 100 fs. Die Repetitionsrate liegt z.B. bei 100 MHz, wobei sich die Repetitionsrate der Signalstrahlung von der Repetitionsrate der Referenzstrahlung geringfügig unterscheidet, z.B. um einige 100 Hz. Die Signalstrahlung und die Referenzstrahlung propagieren in dem Resonator des Doppelkamm-Lasers größtenteils gemeinsam, insbesondere in der Verstärkerfaser 2. Der Resonator des Lasers ist aus polarisationserhaltenden Fasern aufgebaut, wobei die Polarisation der Signalstrahlung und die Polarisation der Referenzstrahlung orthogonal zueinander sind, sodass eine Wechselwirkung zwischen der Signalstrahlung und der Referenzstrahlung vermieden wird. Über einen Polarisationsstrahlteiler 7 ist ein Abschnitt des Resonators in zwei separate Faserzweige 8 und 9 aufgespalten, wobei in einem Faserzweig 8 nur die Signalstrahlung und in dem anderen Faserzweig 9 nur die Referenzstrahlung entsprechend der jeweiligen Polarisation, in der Figur 1 durch die Symbole neben den Faserzweigen 8, 9 angedeutet, getrennt voneinander propagieren. Die unterschiedlichen Repetitionsraten der Signalstrahlung und der Referenzstrahlung ergeben sich durch die Brechungsindexunterschiede in den unterschiedlichen Polarisationsrichtungen und/oder durch die unterschiedlichen Längen der Faserzweige 8, 9. Letztlich erzeugt der dargestellte faserbasierte Doppelkamm-Laser parallel zwei kohärente Frequenzkämme, wobei sich die beiden Frequenzkämme hinsichtlich der Polarisation und hinsichtlich des Kammlinienabstands (entsprechend der unterschiedlichen Repetitionsraten) voneinander unterscheiden. Die erzeugte Laserstrahlung wird mittels des WDM-Kopplers 3 aus dem Resonator ausgekoppelt und einem weiteren Polarisationsstrahlteiler 10 zugeführt, der die Signalstrahlung von der Referenzstrahlung separiert und jeweils an den Ausgängen S und R bereit stellt.

Die Signalstrahlung läuft dann, wie die Figuren 1 und 2 zeigen, entlang des oberen Zweiges 11 und die Referenzstrahlung entlang des unteren Zweiges 12. Über einen Zirkulator 14 wird die Signalstrahlung einer Sende- und Empfangsoptik 15 zugeführt. Mittels der Sende- und Empfangsoptik 15 wird die Signalstrahlung zu einem entfernten Zielobjekt 16 hin ausgesendet. Die an dem Zielobjekt 16 reflektierte oder gestreute Signalstrahlung wird, wie durch den Doppelpfeil angedeutet, wiederum über die Sende- und Empfangsoptik 15 empfangen und über den Zirkulator 14 einer Messeinheit des dargestellten Systems zugeführt. Diese umfasst einen 50/50-Koppler 17, der eingangsseitig mit dem Zirkulator 14 und mit dem Ausgang eines weiteren 50/50-Kopplers 18 verbunden ist. Somit überlagert der 50/50-Kopplers 17 die empfangene Signalstrahlung mit der Referenzstrahlung interferometrisch. Ausgangsseitig ist der 50/50-Kopplers 17 mit einem balancierten Fotodioden-Detektor 19 verbunden, der ein elektrisches Messsignal durch balancierte heterodyne Detektion erzeugt. Das elektrische Messsignal wird einem Digitalisierer 20 zugeführt. Als Taktsignal erhält der Digitalisierer 20 die Referenzstrahlung. Die Referenzstrahlung wird über eine Fotodiode 21 in ein elektrisches Taktsignal umgewandelt. Entsprechend den unterschiedlichen Repetitionsraten der mittels des Doppelkamm-Lasers erzeugten Signal- und Referenzstrahlung resultiert ein von Laserpuls zu Laserpuls zunehmender Zeitversatz zwischen der Signalstrahlung und der Referenzstrahlung. Der Zeitversatz der Laserpulse der Referenzstrahlung gegenüber den Laserpulsen der Signalstrahlung überstreicht dabei zyklisch den vollen Zeitabstand zwischen zwei aufeinanderfolgenden Laserpulsen der Signalstrahlung. Durch die heterodyne Überlagerung mittels des Detektors 19 wird das Messsignal über einen oder mehrere solcher Zyklen hinweg gemessen. Aus dem Verlauf des Messsignals während eines oder mehrerer Zyklen kann dann die Laufzeit der Signalstrahlung abgeleitet werden. Aus der Laufzeit der Signalstrahlung kann wiederum die Distanz zwischen der Sende- und Empfangsoptik 15 und dem Zielobjekt 16 bestimmt werden, z.B. mittels eines mit dem Digitalisierer 20 verbundenen Rechners (nicht dargestellt).

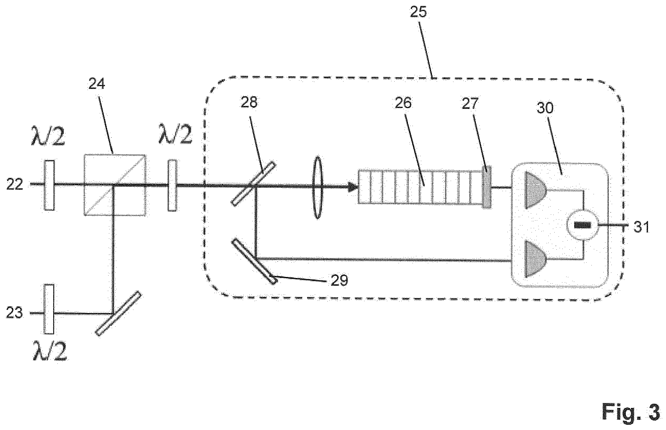

Die Figur 3 zeigt als Alternative zu dem in der Figur 1 dargestellten balancierten Diodendetektor 19 einen optischen Kreuzkorrelator, der die Heterodyndetektion der Signalstrahlung mit höherer zeitlicher Empfindlichkeit ermöglicht. An einem Eingang 22 wird die Signalstrahlung und an einem Eingang 23 die Referenzstrahlung zugeführt. Mittels eines Strahlteilers 24 werden die Signal- und die Referenzstrahlung überlagert. Die überlagerte Signal- und Referenzstrahlung durchläuft in dem optischen Kreuzkorrelator 25 einen periodisch gepolten Kaliumtitanylphosphat-Kristall 26, der die überlagerte Strahlung in Strahlung bei einer höheren harmonischen Frequenz umwandelt. Am Ende des Kristalls 26 befindet sich ein teilreflektierender Spiegel 27, der die bei der fundamentalen Frequenz vorliegende Signal- und Referenzstrahlung reflektiert und die Strahlung bei der höheren harmonischen Frequenz passieren lässt. Aufgrund der Reflektion an dem Spiegel 27 durchläuft die überlagerte Signal- und Referenzstrahlung den Kristall 26 zweifach, und zwar in Hin- und Rückrichtung. Beim Durchlaufen in Rückrichtung wird abermals Strahlung bei der höheren harmonischen Frequenz erzeugt. Diese wird über Spiegel 27, 28 ausgekoppelt. Die ausgekoppelte Strahlung bei der höheren harmonischen Frequenz wird einem Diodendetektor 30 zugeführt. Das Ausgangssignal, d. h. das am Ausgang 31 anliegende elektrische Abtastsignal ist in diesem Fall proportional zur Differenz der mittels der beiden Fotodioden detektierten optischen Signale. Die Differenz der optischen Signale bei der höheren harmonischen Frequenz ist proportional zum Zeitabstand zwischen den Laserpulsen der Signal- und Referenzstrahlung.

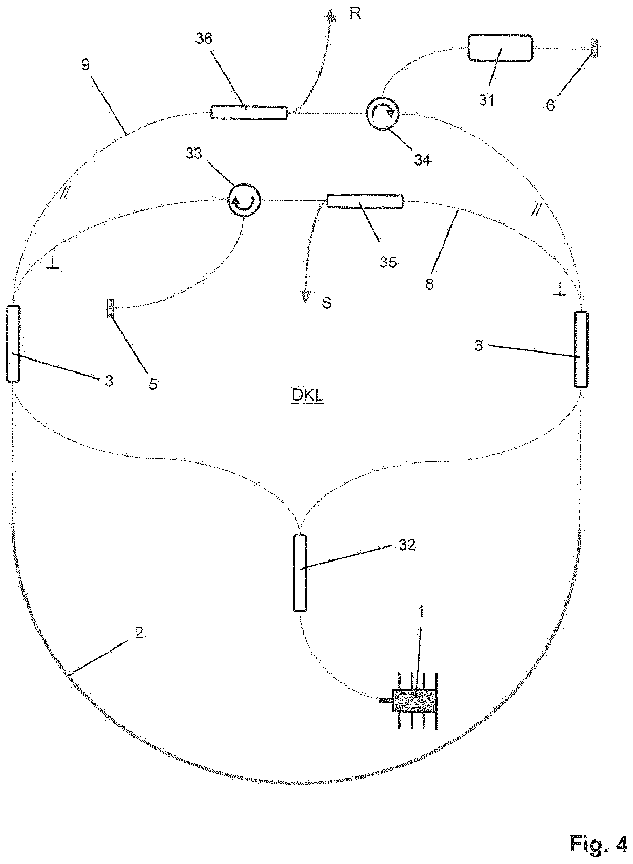

Die Figur 4 zeigt ein Ausführungsbeispiel eines Doppelkamm-Lasers DKL mit ringförmigem Resonator. Die Laserpulse der Signal- und Referenzstrahlung laufen in dem Resonator gegensinnig um, so dass die Wechselwirkung zwischen der Signal- und Referenzstrahlung minimal gehalten wird. Der Doppelkamm-Laser DKL umfasst auch hier eine Laserdiode 1 zum optischen Pumpen einer Verstärkerfaser 2. Die Pumpstrahlung der Laserdiode 1 wird mittels eines Strahlteilers 32 aufgeteilt und über Koppler 3 in den Resonator des Lasers eingekoppelt. Die Signalstrahlung und die Referenzstrahlung propagieren in dem Resonator des Doppelkamm-Lasers gemeinsam (gegensinnig), insbesondere in der Verstärkerfaser 2. Der Resonator des Lasers ist aus polarisationserhaltenden Fasern aufgebaut, wobei die Polarisation der Signalstrahlung und die Polarisation der Referenzstrahlung orthogonal zueinander sind, sodass eine Wechselwirkung zwischen der Signalstrahlung und der Referenzstrahlung vermieden wird. Über die Koppler 3 ist ein Abschnitt des Ringresonators in zwei separate Faserzweige 8 und 9 aufgespalten, wobei in einem Faserzweig 8 nur die Signalstrahlung und in dem anderen Faserzweig 9 nur die Referenzstrahlung entsprechend der jeweiligen Polarisation getrennt voneinander propagieren. Die unterschiedlichen Repetitionsraten der Signalstrahlung und der Referenzstrahlung ergeben sich auch hier durch die Brechungsindexunterschiede in den unterschiedlichen Polarisationsrichtungen und/oder durch die unterschiedlichen Längen der Faserzweige 8, 9. Über Zirkulatoren 33, 34 sind sättigbare Absorberspiegel 5, 6, die als Modenkopplungselemente fungieren, an den Resonator angebunden. Die erzeugte Laserstrahlung wird mittels zweier Koppler 35, 36 aus dem Resonator ausgekoppelt und an den Ausgängen S und R bereitgestellt.

In dem Faserzweig 9 ist bei dem Ausführungsbeispiel der Figur 4 zwischen Zirkulator 34 und sättigbarem Absorber 6 ein Brechungsindexmodulator 31 vorgesehen, zum Beispiel in Form eines elektrooptischen Modulators, um den Repetitionsratenunterschied zwischen Signal- und Referenzstrahlung zu beeinflussen. Ein Laserpuls der Signalstrahlung wird jeweils durch einen Laserpuls der Referenzstrahlung abgetastet. Aufgrund des Unterschiedes der Repetitionsraten steigt der Zeitversatz zwischen den aufeinanderfolgenden Pulsen der Signal- und Referenzstrahlung schrittweise an, und zwar jeweils um das Inverse des Offsets der Repetitionsraten Δfᵣ. Nachdem z.B. der Puls der Signalstrahlung mit 1000 Messpunkten abgetastet wurde, wird er Offset Δfᵣ der Repetitionsraten durch entsprechende Ansteuerung des Modulators 31 invertiert. Von nun an vermindert sich der Puls-zu-Puls Zeitversatz schrittweise und die Signalstrahlung wird mit absteigendem Zeitversatz abgetastet. Dieses Verfahren nutzt die inhärente Kurzzeitstabilität des Doppelkamm-Lasers. Der Modulator wird mittels eines Controllers (nicht dargestellt) angesteuert, der aus der Referenzstrahlung ein Taktsignal ableitet, so dass periodisch, jeweils nach einer vorgebbaren Zahl von Pulsen, zwischen den Repetitionsraten umgeschaltet werden kann. Zu näheren Einzelheiten bezüglich der praktischen Realisierung und den Möglichkeiten der Steuerung der optischen Abtastung sei auf die oben bereits zitierte DE 10 2012 001 754 A1 verwiesen.

## Patentansprüche

1. Vorrichtung zur Distanzmessung, mit
- einem Doppelkamm-Laser, der gepulste Signalstrahlung und gepulste Referenzstrahlung emittiert, wobei der Doppelkamm-Laser ein modengekoppelter Laser ist, der sowohl die Signalstrahlung als auch die Referenzstrahlung emittiert, wobei das Spektrum der Signalstrahlung und das Spektrum der Referenzstrahlung jeweils ein Frequenzkamm ist und wobei sich die Signalstrahlung und die Referenzstrahlung hinsichtlich der Repetitionsrate voneinander unterscheiden,
- einer mit dem Doppelkamm-Laser verbundenen Sende- und Empfangsoptik (15), die die Signalstrahlung zu einem entfernten Zielobjekt (16) hin aussendet und die an dem Zielobjekt (16) reflektierte oder gestreute Signalstrahlung empfängt, und
- einer mit dem Doppelkamm-Laser und der Sende- und Empfangsoptik verbundenen Messeinheit, die aus der empfangenen Signalstrahlung und der Referenzstrahlung ein Messsignal erzeugt und daraus die Distanz zum Zielobjekt (16) ableitet.

2. Vorrichtung nach Anspruch 1, **dadurch gekennzeichnet, dass** die Messeinheit das Messsignal durch interferometrische Überlagerung der empfangenen Signalstrahlung mit der Referenzstrahlung erzeugt und daraus die Distanz zum Zielobjekt (16) ableitet.

3. Vorrichtung nach Anspruch 1 oder 2, **dadurch gekennzeichnet, dass** der Doppelkamm-Laser ein modengekoppelter Faserlaser ist, dessen Resonator als Verstärkungsmedium (2) eine dotierte optische Faser aufweist.

4. Vorrichtung nach Anspruch 2 3, **dadurch gekennzeichnet, dass** die Signalstrahlung und die Referenzstrahlung in zumindest einem Abschnitt des Verstärkungsmediums (2) des modengekoppelten Lasers gemeinsam propagieren.

5. Vorrichtung nach Anspruch 4, **dadurch gekennzeichnet, dass** die Polarisation der Signalstrahlung und die Polarisation der Referenzstrahlung in dem Verstärkungsmedium (2) orthogonal zueinander sind.

6. Vorrichtung nach einem der Ansprüche 3 bis 5, **dadurch gekennzeichnet, dass** der Resonator einen Abschnitt aufweist, in dem die Signalstrahlung und die Referenzstrahlung in separaten Strahlwegen (8, 9) propagieren.

7. Vorrichtung nach Anspruch 6, **dadurch gekennzeichnet, dass** in zumindest einem der Strahlwege (8, 9) eine Verzögerungsstrecke vorgesehen ist.

8. Vorrichtung nach Anspruch 6 oder 7, **dadurch gekennzeichnet, dass** in zumindest einem Strahlweg (8, 9) ein Brechungsindexmodulator angeordnet ist.

9. Vorrichtung nach einem der Ansprüche 1 bis 8, **dadurch gekennzeichnet, dass** die Messeinheit einen Strahlteiler oder Koppler (17) umfasst, der die Signalstrahlung und die Referenzstrahlung auf einem oder auf zwei Fotodetektoren überlagert, so dass das Messsignal als elektrisches Signal durch optisch heterodyne Detektion erzeugt wird, wobei die Messeinheit die Distanz zum Zielobjekt (16) durch Phasendetektion aus dem Messsignal ableitet.

10. Vorrichtung nach einem der Ansprüche 1 bis 8, **dadurch gekennzeichnet, dass** die Messeinheit einen Strahlteiler (24) oder Koppler umfasst, der die Signalstrahlung und die Referenzstrahlung in einem balancierten optischen Kreuzkorrelator (25) überlagert, wobei die Ausgangsstrahlung des balancierten optischen Kreuzkorrelators (25) mittels Fotodetektoren (30) in ein elektrisches Signal als Messsignal umgewandelt wird, wobei die Messeinheit die Distanz zum Zielobjekt (16) durch Phasendetektion aus dem Messsignal ableitet.

11. Verfahren zur Distanzmessung, mit den Verfahrensschritten:
- Erzeugen von gepulster Signalstrahlung und gepulster Referenzstrahlung mittels eines Doppelkamm-Lasers, wobei das Spektrum der Signalstrahlung und das Spektrum der Referenzstrahlung jeweils ein Frequenzkamm ist und wobei sich die Signalstrahlung und die Referenzstrahlung hinsichtlich der Repetitionsrate voneinander unterscheiden, wobei der Doppelkamm-Laser durch einen modengekoppelten Laser gebildet ist, der sowohl die Signalstrahlung als auch die Referenzstrahlung emittiert,
- Aussenden der Signalstrahlung zu einem entfernten Zielobjekt (16),
- Empfangen der an dem Zielobjekt (16) reflektierten oder gestreuten Signalstrahlung,
- Erzeugen eines Messsignals aus der empfangenen Signalstrahlung und der Referenzstrahlung, und
- Ableiten der Distanz zu dem Zielobjekt (16) aus dem Messsignal.
